# EUROPÄISCHE PATENTSCHRIFT

(11) **EP 1 700 026 B1**
(45) Veröffentlichungstag und Bekanntmachung des Hinweises auf die Patenterteilung: **06.01.2021**
(21) Anmeldenummer: 04803131.4
(22) Anmeldetag: 12.11.2004
(51) Int. Cl.: F17C 9/04, F02M 21/02, F02D 19/02, F02M 21/06

(54) **SYSTEM UND VERFAHREN ZUR VERDAMPFUNG EINES KRYOGEN GESPEICHERTEN KRAFTSTOFFS**
SYSTEM AND METHOD FOR VAPORIZING A CRYOGENICALLY STORED FUEL
SYSTEME ET PROCEDE DE VAPORISATION D'UN CARBURANT STOCKE DE MANIERE CRYOGENIQUE

(30) Priorität: 11.12.2003 DE 10358311
(43) Veröffentlichungstag der Anmeldung: 13.09.2006
(73) Patentinhaber: Bayerische Motoren Werke Aktiengesellschaft, 80809 München (DE)
(72) Erfinder: GRÖTZBACH, Andres, 86911 Diessen (DE); FICKEL, Hans-Christian, 85368 Moosburg (DE)
(74) Vertreter: Bücken, Helmut
(86) Internationale Anmeldenummer: PCT/EP2004/012828
(87) Internationale Veröffentlichungsnummer: WO 2005/061949

(56) Entgegenhaltungen:
- EP-A- 1 213 464
- DE-A1- 10 232 522
- DE-A1- 19 506 486
- DE-A1- 19 521 591
- US-A- 5 390 646

## Beschreibung

Die Erfindung betrifft ein System sowie ein Verfahren zur Verdampfung eines durch Kühlung, insbesondere unter die Umgebungstemperatur verflüssigten, kryogen gespeicherten Kraftstoffs, beispielsweise von Wasserstoff.

Die Speicherung von Kraftstoffen deren kritische Temperatur unterhalb üblicher Umgebungstemperaturen liegt, kann in isolierten Tankanordnungen erfolgen. Letztere, auch als Kryo-Tanks bezeichnete Tankanordnungen zeichnen sich neben einem vergleichsweise geringen Eigengewicht auch durch ein günstiges Bauraum/Speicherkapazitätsverhältnis aus.

Die zur flüssigen Speicherung gekühlter und verflüssigter Kryokraftstoffe vorgesehenen Tankanordnungen werden vorzugsweise unter einem vorbestimmten Überdruck mit flüssigem Kraftstoff befüllt. Das durch den Tankdruck bestimmte Speichertemperaturniveau kann durch Kühleinrichtungen sowie durch Verdampfen des Kraftstoffs, aufrecht erhalten werden. Bei der Verwendung derartiger Tanksysteme in Kraftfahrzeugen erfolgt die Zuleitung des Kraftstoffes zum Verbraucher üblicherweise in gasförmigem Zustand, wobei der für den Betrieb einer Brennkraftmaschine erforderliche Gaszustrom durch geregelte Zufuhr von Wärme zu dem zunächst flüssigen Kraftstoff erfolgt, wobei entsprechend der zugeführten Wärme, gasförmiger Kraftstoff generiert wird.

Die US-A-5 390 646 betrifft eine zweistufige Ladeluftkühlung mit einem Phasenwechsel-Wärmetransferfluid. Für einen Verbrennungsmotor ist ein Luft-KraftstoffVersorgungssystem vorgesehen, wobei Kraftstoff, wie Erdgas, in einem Kraftstofftank als kryogene Flüssigkeit gespeichert ist und wobei Versorgungsluft verdichtet wird. Die Ladeluft wird zwischengekühlt, um ihre Dichte und somit eine Motorleistung zu erhöhen. Wärme aus dem Zwischenkühlungsprozess wird genutzt, um den flüssigen Erdgas-Kraftstoff zu verdampfen. Ein Wärmeaustausch von der Ladeluft zu dem Zwischenkühlungsprozess wird mit einem phasenwechselnden Wärmetransferfluid durchgeführt. Das Wärmetransferfluid siedet an dem Zwischenkühler und kondensiert an dem Kraftstoffverdampfer, um an den Ladeluftkühler-Flächen eine präzise Temperaturkontrolle ohne Reifbildung zu ermöglichen.

Der Erfindung liegt die Aufgabe zugrunde, ein System sowie ein Verfahren zur Verdampfung eines kryogen gespeicherten Kraftstoffs zu schaffen, das sich durch eine hohe inhärente Sicherheit auszeichnet und unter regelungstechnischen Gesichtspunkten Vorteile bietet.

Diese Aufgabe wird erfindungsgemäß gelöst durch ein System, zur Verdampfung eines kryogen gespeicherten Kraftstoffs durch Nutzung von im Bereich eines Kraftstoffverbrauchers anfallender Wärme gemäß dem unabhängigen Anspruch 1, insbesondere mit:
- einer Entnahmeleitungseinrichtung zur Ableitung von Kraftstoff aus einer Tankeinrichtung,
- einer Verdampfereinrichtung, zur Verdampfung des über die Entnahmeleitung bezogenen Kraftstoffes unter Einbringung der Verdampfungswärme,
- einer Gasleitungseinrichtung zur Zuleitung des verdampften Kraftstoffes zu jenem Verbraucher,
- einem Wärmetransfersystem zur Aufnahme von Wärme, und
- einer, von einem Wärmetransferfluid durchströmten Kraftstoff-Wärmetauschereinrichtung, die Teil der Verdampfereinrichtung bildet, zur Bereitstellung der Verdampfungswärme durch einen aus dem verbraucherseitigen Wärmetransfersystem bezogenen Wärmestrom, wobei
- das Wärmetransfersystem im Bereich des Verbrauchers vorgesehen ist und zur Aufnahme von im Bereich des Verbrauchers anfallender Wärme dient,
- die Kraftstoff-Wärmetauschereinrichtung mit dem verbraucherseitigen Wärmetransfersystem unter Einschaltung eines Zwischenwärmetauschers thermisch gekoppelt ist und
- die Kraftstoff-Wärmetauschereinrichtung mit dem verbraucherseitigen Wärmetransfersystem über einen Vorlaufabschnitt und einen Rücklaufabschnitt derart gekoppelt ist, dass der zur Einbringung der Verdampfungswärme geforderte Durchsatz des Wärmetransferfluides durch die Kraftstoff-Wärmetauschereinrichtung von dem Fluiddurchsatz durch den Vorlaufabschnitt und/oder den Rücklaufabschnitt abweichend einstellbar ist.

Dadurch wird es insbesondere bei einem als Brennkraftmaschine oder als fluidgekühlte Brennstoffzelle ausgebildeten Verbraucher möglich, den zur Verdampfung des Kraftstoffs diesem zuzuführenden Wärmestrom in einer dem momentanen Betriebszustand des Verbrauchers verbessert Rechnung tragenden Weise einzustellen.

Durch das erfindungsgemäße Lösungskonzept wird es weiterhin auch möglich, das Kältepotential des Kraftstoffes für weitere Kühlzwecke zu nutzen. Auf Grundlage des erfindungsgemäßen Lösungskonzeptes wird es insbesondere auch möglich, die Ableitung ggf. verbraucherseitig im Überschuss anfallender Abwärme in apparatetechnisch vorteilhafter Weise unter einem hohen Temperaturgradienten mit kleinbauenden Abwärmetauschern zu bewerkstelligen.

Durch die Koppelung der Kraftstoffwärmetauscher-Einrichtung mit dem im Bereich des Verbrauchers vorgesehenen Wärmetransfersystem unter Einschaltung eines Zwischenwärmetauschers wird es auf vorteilhafte Weise möglich, den verbraucherseitigen Wärmetransferkreis und den verdampferseitigen Wärmetransferkreis voneinander hydraulisch getrennt auszuführen. Durch die Trennung der Fluidkreise wird es insbesondere auch möglich, diese Fluidkreise mit unterschiedlichen Wärmetransferfluiden zu befüllen. Die zur Befüllung des jeweiligen Wärmetransferkreises vorgesehenen Fluide können in vorteilhafter Weise auf das für den jeweiligen Wärmetransfer in Betracht kommende Temperaturniveau, sowie auf konstruktive Eigenschaften der jeweiligen Fluidwege abgestimmt sein. Insbesondere ist es möglich, den verdampferseitigen Fluidkreis mit einem tieftemperaturbeständigen Fluid zu befüllen.

Alternativ zu der Ankoppelung des verdampferseitigen Wärmetransferkreises an den verbraucherseitigen Wärmetransferkreis unter Zwischenschaltung eines Zwischenwärmetauschers - oder auch in Kombination mit dieser Maßnahme - ist es auch möglich, die Koppelung unter Einschluss einer Leitungsbrücke zu bewerkstelligen, die eine Rückführung eines aus der Kraftstoffwärmetauschereinrichtung abfließenden Wärmetransferfluidstromes zur Eingangsseite der Kraftstoffwärmetauscher-Einrichtung ermöglicht. Hierdurch wird es insbesondere möglich, eine permanente und hinsichtlich des Volumenstroms abgestimmte Zirkulation des verdampferseitigen Wärmetauschfluides durch die Kraftstoffwärmetauscher-Einrichtung zu realisieren. Die der momentan geforderten Verdampfungsleistung Rechnung tragende Wärmemenge kann durch geregelte Zuleitung eines Wärmetransferfluidteilstromes aus dem verbraucherseitigen Wärmetransfersystem in das verdampferseitige Wärmetransfersystem erreicht werden.

Die Koppelung des verbraucherseitigen Wärmetransfersystems und des verdampferseitigen Wärmetransfersystems kann weiterhin auch unter Einschluss einer Beipassleitungseinrichtung bewerkstelligt werden, zur Schaffung einer Fluidverbindung zwischen dem Vorlaufabschnitt und dem Rücklaufabschnitt unter Umgehung der Kraftstoff-Wärmetauschereinrichtung. Über diese Beipassleitungseinrichtung wird es ebenfalls möglich, den Wärmeeintrag aus dem verbraucherseitigen Bereich in den verdampferseitigen Bereich auf die geforderte Verdampferleistung abzustimmen.

Gemäß einer besonders bevorzugten Ausführungsform der Erfindung ist ein Eingangstemperatur-Erfassungsorgan vorgesehen zur Erfassung der Eingangstemperatur des Wärmetransferfluides am Eingang der Kraftstoff-Wärmetauschereinrichtung. Die hierdurch erfassbare Eingangstemperatur des Wärmetransferfluides kann bei der Festlegung des durch die Kraftstoff-Wärmetauschereinrichtung geführten Fluidstromes Berücksichtigung finden. Insbesondere in Kombination mit der vorangehend beschriebenen Maßnahme ist vorzugsweise im Bereich der Kraftstoff-Wärmetauschereinrichtung ein Ausgangstemperatur-Erfassungsorgan vorgesehen, zur Erfassung der Ausgangstemperatur des Wärmetransferfluides am Ausgang der Kraftstoff-Wärmetauschereinrichtung. Durch Erfassung des sich über die Kraftstoff-Wärmetauschereinrichtung aufbauenden Temperaturgradienten, sowie vorzugsweise auch der absoluten Temperaturen wird es möglich, über den durch die Kraftstoffwärmetauscher-Einrichtung geführten Volumenstrom, die eingebrachte Heizleistung derart abzustimmen, dass die Abgabetemperatur des in der Verdampfereinrichtung verdampften Kraftstoffes allenfalls geringe Abweichungen zu einem vorgegebenen Sollwert aufweist.

Zur Förderung des Wärmetransferfluides durch die Kraftstoff-Wärmetauschereinrichtung ist gemäß einer besonders bevorzugten Ausführungsform der Erfindung eine Pumpeneinrichtung vorgesehen, wobei die Förderleistung dieser Pumpeneinrichtung vorzugsweise nach Maßgabe der momentan geforderten Verdampferleistung oder auch unter Berücksichtigung anderer Betriebsparameter, insbesondere des Verbrauchers, eingestellt werden kann.

Gemäß einer weiteren besonders bevorzugten Ausführungsform der Erfindung sind weiterhin auch Stellglieder, insbesondere Ventile vorgesehen zur Einstellung der Durchflussbedingungen durch die Kraftstoff-Wärmetauschereinrichtung sowie vorzugsweise auch durch etwaige Verbindungsleitungsabschnitte zwischen dem Vorlaufabschnitt und dem Rücklaufabschnitt des verbraucherseitigen Wärmetransfersystems. Derartige Stellglieder, insbesondere Ventile, können insbesondere zur Einstellung der Durchflussbedingungen durch die Beipass- oder Überbrückungsleitung vorgesehen sein.

In vorteilhafter Weise ist eine Steuer-Einrichtung vorgesehen, zur Einstellung des Fluiddurchsatzes durch den Vorlauf- und den Rücklaufabschnitt und/oder die Kraftstoff-Wärmetauschereinrichtung derart, dass sich im Hinblick auf den momentanen Betriebszustand des Verbrauchers vorteilhaft abgestimmte Systemeinstellungen ergeben. Im Falle einer Wasserstoff betriebenen Brennkraftmaschine wird es hierdurch insbesondere möglich, während der Warmlaufphase für die Einstellung der Fluidströme andere Parameter zu wählen als beispielsweise für die Einstellung der Fluidströme nach Abschluss der Warmlaufphase. Die Einstellung der Fluidströme kann insbesondere auch unter Berücksichtigung der Umgebungstemperatur erfolgen. Die Steuer-Einrichtung umfasst vorzugsweise eine programmierbare RechnerEinrichtung. Alternativ hierzu oder auch in Kombination mit einer derartigen Steuer-Einrichtung ist es möglich, die Abstimmung der Fluidströme durch selbstregelnde Elemente zum Beispiel Wachs-Thermostatventile zu bewerkstelligen so dass auch unabhängig von einer rechnergeführten Systemregelung das System hinreichend stabil ist und insbesondere nicht in einen unzulässigen Zustand gelangen kann.

Gemäß einer besonders bevorzugten Ausführungsform der Erfindung wird die Kraftstoffwärmetauscher-Einrichtung derart betrieben, dass durch den ausgangsseitig abfließenden Wärmetransferfluidstrom ein Kühlpotential für den Motor bzw. den Verbraucher, und/oder auch für zumindest phasenweise zu kühlende Untersysteme zur Verfügung steht. Bei derartigen Untersystemen kann es sich beispielsweise um ein Abgasrückführsystem und/oder ein Ladeluftkühlsystem und/oder ein Fahrzeugklimatisierungssystem und/oder ein Getriebekühlsystem sowie auch um ein Lufttrocknungssystem zur Trocknung der Ansaugluft handeln.

Die Abzweigung des Wärmetransferfluides aus dem verbraucherseitigen Bereich erfolgt vorzugsweise an einer Systemstelle, die ein hinreichend hohes Temperaturpotential zur Aufbringung der geforderten Heizleistung zur Verfügung stellt. Um insbesondere im Rahmen einer Kaltstartphase eine ausreichende Verdampferleistung sicherzustellen, erfolgt die Abzweigung des Wärmetransferfluides vorzugsweise aus einem schnell heizenden und/oder Hochtemperaturabschnitt des verbraucherseitigen Wärmetransfersystems. Der Abzug des Wärmetransfermediums auf einem hohen Temperaturniveau ermöglicht eine besonders hohe Regeldynamik bei der Verdampfung des Kraftstoffes.

Es ist jedoch auch möglich, den Abzug des den Wärmetransfer aus dem Bereich des Verbrauchers ermöglichenden Wärmetransfermediums, an einer Systemstelle vorzunehmen, an welcher das Wärmetransfermedium auf einem gerade hinreichend hohen Temperaturniveau zur Verfügung steht. Hierdurch wird zum einen erreicht, dass das über den Rücklaufabschnitt zurückfließende Wärmetransfermedium ein hohes Kühlpotential aufweist, andererseits wird es durch diesen Ansatz auch möglich, die ggf. erforderliche Ableitung weiterer Abwärme des Verbrauchers auf einem hohen Temperaturniveau und damit unter einem hohen Temperaturgradienten gegenüber der Umgebung - und damit mit kompakten Wärmetauschern - zu bewerkstelligen. Es ist möglich, Ventileinrichtungen vorzusehen, durch welche die jeweils vorteilhafteste Abzweigung des Wärmetransferfluides temperaturabhängig, oder in Abhängigkeit weiterer Betriebsparameter des Verbrauchers gesteuert werden kann.

Der durch den Wärmebezug der Kraftstoffwärmetauscher-Einrichtung gekühlte und in den verbraucherseitigen Fluidkreis über den Rücklaufabschnitt zurückfließende Wärmetransferfluidstrom kann gemäß einer besonders bevorzugten Ausführungsform der Erfindung in den Zulaufbereich des Kühlwasserwärmetauschers eingespeist werden, so dass am Kühlwasserwärmetauscher ein durch Mischung der Fluidströme bestimmtes Temperaturniveau herrscht und die Abstimmung des Rücklaufstromes insgesamt über eine nachgeordnete Thermostatventileinrichtung erfolgen kann. Alternativ hierzu ist es jedoch auch möglich, die Rückspeisung in den Kühlfluidstrom stromabwärts eines Kühlwasser-Wärmetauschers vorzunehmen. Hierdurch wird es möglich, zur Ableitung überschüssiger Abwärme, am Eingang des Kühlwasserwärmetauschers ein hohes Temperaturniveau aufrecht zu erhalten.

Das erfindungsgemäße Wärmetransfersystem eignet sich insbesondere für den Betrieb einer Wasserstoff betriebenen Brennkraftmaschine. Alternativ hierzu oder auch in Kombination damit ist es auch möglich, über das erfindungsgemäße Wärmetransfersystem eine Brennstoffzellen-Anlage mit gasförmigem Wasserstoff zu versorgen.

Das verbraucherseitige Wärmetransfersystem bildet vorzugsweise Bestandteil eines Kühlmittelkreises des Verbrauchers. Im Falle der Ausgestaltung des Verbrauchers als Brennkraftmaschine ist es in vorteilhafter Weise möglich, insbesondere den gekühlt zurückfließenden Fluidstrom über ein Abgasrückführsystem zu führen, so dass im Bereich des Abgasrückführsystems bedarfsweise eine Kühlung von Abgas ermöglicht ist, das in bestimmten Motorbetriebsphasen zurückgeführt wird.

Es ist auch möglich, das verbraucherseitige Wärmetransfersystem so auszubilden, dass dieses einen Schmierstoffkreis, beispielsweise den Motorölkreis oder auch Getriebekomponenten umfasst. Die Durchströmung der Kraftstoffwärmetauscher-Einrichtung erfolgt vorzugsweise nach dem Gegenstromprinzip, so dass austrittsseitig eine niedrige Rücklauftemperatur des Wärmetransferfluides herrscht. Es ist jedoch auch möglich, die Kraftstoff-Wärmetauscheinrichtung derart anzuordnen, dass der Wärmetransfer nach dem Gleichstromprinzip erfolgt. Die Wärmetransferleistung der Kraftstoff-Wärmetauschereinrichtung kann auch abgestimmt werden, indem diese selektiv nach dem Gleich- oder dem Gegenstromprinzip betrieben wird.

Die Ableitung des Kraftstoffs aus dem Kraftstofftank kann derart erfolgen, dass der Kraftstoff in flüssigem Zustand in den Wärmetauscher gelangt. Die Kraftstoff-Wärmetauschereinrichtung ist vorzugsweise derart ausgebildet, dass etwaige darin auftretende Vereisungen keine vollständige Blockade der Fluidwege verursachen.

Es ist möglich, den Zustrom des Kraftstoffs zu der Verdampfereinrichtung durch eine Dossier-Einrichtung, insbesondere eine Pumpen-Einrichtung zu steuern. Es ist möglich, den Kraftstoff schubweise in den Verdampfer hinein einströmen zu lassen. Die eingangs angegebene Aufgabe wird erfindungsgemäß auch gelöst durch ein Verfahren zur Verdampfung eines kryogen gespeicherten Kraftstoffs, insbesondere Wasserstoff, gemäß dem unabhängigen Anspruch 25, bei welchem der Kraftstoff aus einer Tank-Einrichtung abgeleitet und über eine, einen Wärmetauscher umfassende Verdampfer-Einrichtung erwärmt und verdampft wird, wobei der zur fortlaufenden Verdampfung des Kraftstoffs erforderliche Wärmestrom über einen temperierten Wärmetransferfluidstrom bezogen wird, der aus einem verbraucherseitig vorgesehenen Wärmetransfersystem abgeleitet wird, wobei der aus dem verbraucherseitigen Wärmetransfersystem abgeleitete Fluidstrom, der in einem Primärkreis geführt wird, und ein durch die Verdampfer-Einrichtung geführter Verdampferfluidstrom , der in einem Sekundärkreis geführt wird, thermisch gekoppelt sind und in Abhängigkeit vom Betriebszustand des Verbrauchers zumindest phasenweise auf verschiedene Pegel eingestellt werden, um den Wärmeeintrag in den Kraftstoff über den Massenstrom des Wärmeträgerfluides einzustellen, der zumindest phasenweise von dem zum Wärmeabzug aus dem Verbraucher veranlassten Massenstrom abweicht.

Diesem Verfahren liegt der Ansatz zugrunde, den Wärmeeintrag in den Kraftstoff über den Massenstrom eines Wärmeträgerfluides einzustellen, der zumindest phasenweise von dem zum Wärmeabzug aus dem Verbraucher veranlassten Massenstrom abweicht. Diese Abkoppelung der Massenströme kann erfindungsgemäß auf Grundlage von drei verschiedenen Ansätzen erfolgen, wobei diese Ansätze auch in Kombination zur Anwendung kommen können. Bei diesen Ansätzen handelt es sich um den Zwischen-Wärmetauschansatz, den Rezirkulations-Wärmetauschansatz, sowie den Überbrückungsansatz. Der Zwischen-Wärmetauschansatz und der Rezirkulations-Wärmetauschansatz ermöglichen es, im Kraftstoff-Wärmetauscher einen Massenstrom des Wärmetransferfluides einzustellen, der größer ist, als der zum Abzug der erforderlichen Wärmemenge aus dem Verbraucher erforderliche Massenstrom des Wärmetransferfluides.

Weitere Einzelheiten und Merkmale der Erfindung ergeben sich aus der nachfolgenden Beschreibung in Verbindung mit der Zeichnung. Es zeigt:
- **Figur 1**: eine vereinfachte Schemadarstellung einer ersten Variante eines Kühlmittelkreislaufs für eine Wasserstoff betriebene Brennkraftmaschine bei welchem ein Zwischenwärmetauscher vorgesehen ist, der eine Trennung eines verbraucherseitigen Fluidkreises von einem verdampferseitigen Fluidkreis ermöglicht;
- **Figur 2a**: eine Schemadarstellung zur Erläuterung einer zweiten erfindungsgemäßen Variante mit einer Rücklaufventil-gesteuerten Rezirkulationsleitung, die eine Rückzirkulation eines aus einem Wasserstoffverdampfer abfließenden Teilstrom eines Wärmetransferfluides zum Eingangsbereich des Verdampfers ermöglicht ist;
- **Figur 2b**: eine Schemadarstellung zur Erläuterung einer dritten erfindungsgemäßen Variante, ebenfalls mit einer Rücklaufventil-gesteuerten Rezirkulationsleitung sowie zusätzlicher, ventilgesteuert aktivierbarer Bypassleitung;
- **Figur 2c**: eine Schemadarstellung zur Erläuterung einer vierten erfindungsgemäßen Variante mit einer Vorlaufventil-gesteuerten Rezirkulationsleitung;
- **Figur 2d**: eine Schemadarstellung zur Erläuterung einer fünften erfindungsgemäßen Variante mit einer ventilgesteuerten Bypassleitung (System nach Fig. 2b jedoch ohne Rezirkulationsleitung);
- **Figur 3**: eine Gesamtdarstellung eines Kreislaufsystems für ein Wärmetransfermedium für eine flüssigkeitsgekühlte Brennkraftmaschine mit einem Verdampfungssystem gemäß Figur 2a;
- **Figur 4**: eine Gesamtdarstellung eines Kreislaufsystems für ein Wärmetransfermedium für eine flüssigkeitsgekühlte Brennkraftmaschine mit einem Verdampfungssystem gemäß Figur 2c;
- **Figur 5**: eine Gesamtdarstellung eines Kreislaufsystems für ein Wärmetransfermedium für eine flüssigkeitsgekühlte Brennkraftmaschine mit einem Verdampfungssystem gemäß Figur 2d;
- **Figur 6**: eine Gesamtdarstellung eines Kreislaufsystems für ein Wärmetransfermedium für eine flüssigkeitsgekühlte Brennkraftmaschine mit einem Verdampfungssystem gemäß Figur 2b und einem über den Rücklaufabschnitt gekühlten Abgasrückführsystem;
- **Figur 7**: eine Gesamtdarstellung eines Kreislaufsystems für ein Wärmetransfermedium für eine flüssigkeitsgekühlte Brennkraftmaschine mit einem Verdampfungssystem gemäß Figur 2c und einem über den Rücklaufabschnitt gekühlten Abgasrückführsystem;
- **Figur 8**: eine Gesamtdarstellung eines Kreislaufsystems für ein Wärmetransfermedium für eine flüssigkeitsgekühlte Brennkraftmaschine mit einem Verdampfungssystem gemäß Figur 2d und einem über den Rücklaufabschnitt gekühlten Abgasrückführsystem.

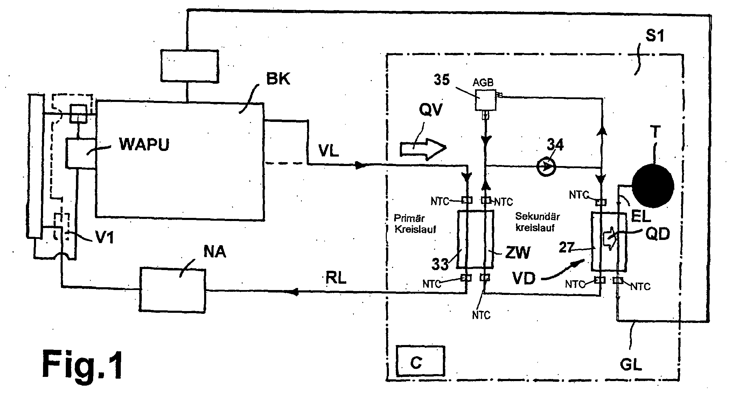

Figur 1 zeigt in Form einer Schemadarstellung ein System S1, zur Verdampfung eines in einem Kraftstofftank T kryogen gespeicherten Kraftstoffs durch Nutzung von im Bereich eines hier als Brennkraftmaschine BK ausgebildeten Kraftstoffverbrauchers anfallender Wärme.

Das System S1 umfasst eine Entnahmeleitungseinrichtung EL zur Ableitung von Kraftstoff aus jenem Kraftstofftank T, eine Verdampfereinrichtung VD, zur Verdampfung und Temperierung des über die Entnahmeleitung EL ggf. in flüssiger Form bezogenen Kraftstoffes unter Einbringung der Verdampfungswärme QD, eine Gasleitungseinrichtung GL zur Zuleitung des verdampften Kraftstoffes zu jenem Verbraucher BK, Abschnitte eines im Bereich des Verbrauchers BK vorgesehenen Wärmetransfersystems zur Aufnahme von im Bereich des Verbrauchers anfallender Wärme, und eine von einem Wärmetransferfluid durchströmte Kraftstoff-Wärmetauschereinrichtung 27, die Teil der Verdampfereinrichtung VD bildet, zur Bereitstellung des Verdampfungswärmestroms QD durch einen aus dem Wärmetransfersystem bezogenen Wärmestrom, QV.

Das System zeichnet sich dadurch aus, dass die Koppelung der Verdampfereinrichtung VD mit dem verbraucherseitigen Wärmetransfersystem über einen Vorlaufabschnitt VL und einen Rücklaufabschnitt RL derart bewerkstelligt ist, dass der zur Einbringung der Verdampfungswärme QD geforderte Durchsatz des Wärmetransferfluides durch die Kraftstoff-Wärmetauschereinrichtung 27 von dem Fluiddurchsatz durch den Vorlaufabschnitt VL und/oder den Rücklaufabschnitt RL abweichend einstellbar ist.

Bei dem gezeigten Ausführungsbeispiel ist die thermische Koppelung der KraftstoffWärmetauschereinrichtung 27 mit dem verbraucherseitigen Wärmetransfersystem unter Einschaltung eines Zwischenwärmetauschers ZW bewerkstelligt. Durch die derart vorgenommene Koppelung der Kraftstoff-Wärmetauschereinrichtung 27 wird eine Trennung der Fluidkreise in einen Primärkreis und wenigstens einen Sekundärkreis erreicht. In den beiden getrennten Fluidkreisen können unterschiedliche, auf den jeweils maßgeblichen Temperaturbereich abgestimmte Wärmetransferfluide aufgenommen sein.

Im Bereich der Verdampfereinrichtung VD ist ein Eingangstemperaturerfassungsorgan NTC1 vorgesehen, zur Erfassung der Eingangstemperatur des Wärmetransferfluides am Eingang der Kraftstoff-Wärmetauschereinrichtung 27. Zur Erfassung der Ausgangstemperatur des verdampften Kraftstoffes am Ausgang des Verdampfers VD ist ein Kraftstoffausgangstemperaturerfassungsorgan NTC2 am Ausgang des Verdampfers VD vorgesehen. Weiterhin ist auch ein Ausgangstemperaturerfassungsorgan NTC3 vorgesehen, zur Erfassung der Ausgangstemperatur des Wärmetransferfluides am Ausgang des Verdampfers VD.

Auf Grundlage der über die Temperaturerfassungsorgane erfassten Temperaturen ist es möglich, den Massenstrom des Wärmetransferfluides des Sekundärkreislaufes derart abzustimmen, dass im Bereich des Verdampfers VD ein der momentan geforderten Verdampfungsleistung Rechnung tragender Wärmezustrom QD erfolgt.

Der Fluiddurchsatz wird vorzugsweise durch eine Pumpe 34 eingestellt. Die Pumpe 34 kann als hinsichtlich der Förderleistung steuerbare Pumpe ausgebildet sein. Es ist auch möglich, in dem Sekundärkreis Stellorgane vorzusehen, durch welche der Fluiddurchsatz im Sekundärkreis bei Verwendung einer Pumpe mit konstanter Förderleistung abstimmbar ist. Derartige Stellorgane können als Thermostatventile ausgebildet sein.

Die Wärmeübertragung vom Primärkreislauf in den Sekundärkreislauf wird ebenfalls durch Temperaturerfassungsorgane NTC erfasst. Die Durchströmung des Zwischenwärmetauschers auf der Seite des Primärkreises kann unter der Wirkung eines Druckgefälles erfolgen, das durch eine im Bereich des Verbrauchers vorgesehenen Wasserpumpe WAPU erzeugt wird.

Die Koppelung des Systems S1 mit dem weiteren verbraucherseitigen Wärmetransfersystem erfolgt über den Vorlaufleitungsabschnitt VL und den Rücklaufleitungsabschnitt RL. Das Kühlpotential des über den Rücklaufleitungsabschnitt RL zurückfließenden Wärmetransferfluides kann zur Kühlung von Nebenaggregaten NA herangezogen werden. Hierbei kann es sich um einen Wärmetauscher für ein Abgasrückführsystem, um eine Lufttrocknungseinrichtung, Getriebekomponenten, elektrische Nebenaggregate wie auch Wärmetauscher einer Fahrzeugklimaanlage handeln. Der Betrieb des Systems S1 kann so abgestimmt erfolgen, dass eine geforderte Rücklauftemperatur erreicht wird.

Die Abstimmung des Systems derart, dass in dem Verdampfer VD ein der geforderte Verdampfungsleistung Rechnung tragender Wärmestrom in den Kraftstoff eingeleitet wird, erfolgt vorzugsweise unter Verwendung einer elektronischen Steuereinheit C. Diese Steuereinheit C hat vorzugsweise Zugriff auf Daten über den momentanen Betriebszustand des Verbrauchers BK einschließlich den Temperaturen des Wärmetransferfluides in den jeweiligen Systemabschnitten. Auf Grundlage dieser Daten kann der Betrieb des Systems unter mehreren Kriterien, wie z.B. Leistungsreserve, Systemwirkungsgrad, Sicherheitsreserve abgestimmt werden.

Der bei dieser Ausführungsform von dem Fluidkreis des Verbrauchers BK getrennte Sekundärkreis ist mit einem tieftemperaturbeständigen Wärmetransferfluid befüllt. Der Sekundärkreislauf verfügt über einen eigenen Ausgleichsbehälter AGB und ein eigenes Entgasungssystem. Das Entgasungssystem ist derart aufgebaut, dass etwaige, in den Sekundärkreis eindringende Gase abgeleitet und ggf. katalytisch oxidiert werden. Der Systemdruck in dem Sekundärkreislauf kann auf einen Wert eingestellt werden, der höher ist als der Druck des verdampften Kraftstoffes, so dass im Falle etwaiger Undichtigkeiten kein Kraftstoff in den Sekundärkreislauf eindringen kann. Alternativ hierzu ist es auch möglich, den Druck im Sekundärkreislauf so niedrig zu wählen, dass dieser unter dem Druck im Primärkreislauf liegt. Hierdurch wird einer Übertragung zündfähiger Gase in den Primärkreislauf vorgebeugt.

Der Zwischenwärmetauscher ZW kann als Systemschnittstelle ausgebildet sein, der eine einfache, modulare Ankoppelung eines Verdampfers, oder insbesondere eines Tanksystems mit integriertem Verdampfer ermöglicht. Die Steuereinheit C kann als Untereinheit in das Tanksystem integriert sein, oder auch durch das Motormanagement des Verbrauchers BK bereitgestellt sein.

Die Rückspeisung des über den Rücklaufleitungsabschnitt RL zurückfließenden Fluides in das Wärmetransfersystem kann stromabwärts eines Kühlwasserwärmetauschers K, oder auch wie durch Strichlinien angedeutet, stromaufwärts des Kühlwasserwärmetauschers K erfolgen. Es ist möglich, das Leitungssystem so auszubilden, dass beide Rückspeisevarianten möglich sind, wobei die entsprechende Fluidführung vorzugsweise ventilgesteuert abgestimmt werden kann. Die hierzu vorgesehene Ventileinrichtung V1 kann so ausgebildet sein, dass diese auch Mischzustände, d.h. eine Teilstromeinspeisung stromabwärts des Kühlers K, und eine Teilstromeinspeisung stromaufwärts des Kühlers K veranlassen kann. Der Schaltzustand der Ventileinrichtung V1 kann in Abhängigkeit ausgewählter Motorbetriebsparameter, insbesondere der Kühlerrücklauftemperatur, festgelegt werden.

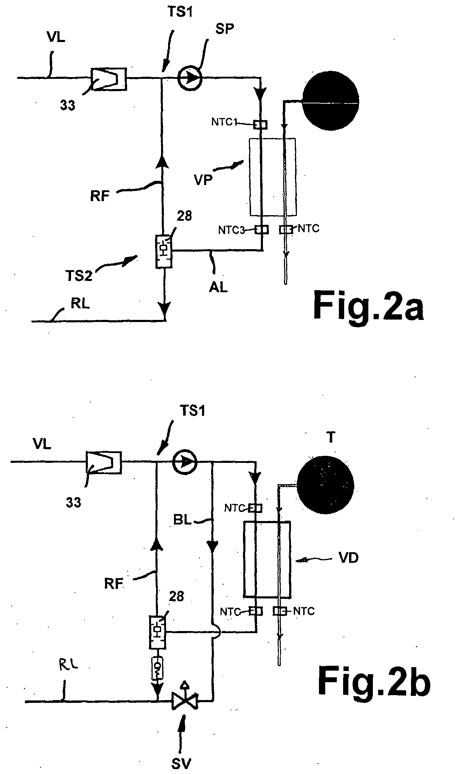

Figur 2a zeigt eine zweite Variante des erfindungsgemäßen Verdampfungssystems, bei welchem das über die Vorlaufleitung VL aus dem Bereich des Verbrauchers abfließende Wärmetransferfluid über eine Filtereinrichtung 33 zu einer Verzweigungsstelle TS1 und über eine Sekundärkreispumpe SP in die Verdampfereinrichtung VD einfließen kann. Die Ableitung des die Verdampfereinrichtung durchströmenden Wärmetransferfluides erfolgt über eine Auslaufleitung AL, die in eine Verzweigungsstelle TS2 mündet. Die Verzweigungsstelle TS2 stellt einen in den Rücklaufleitungsabschnitt RL mündenden Ausgang sowie einen in einen Rückführungsleitungsabschnitt RF mündenden Ausgang bereit. Im Bereich der Verzweigungsstelle TS2 ist eine Ventileinrichtung 28 vorgesehen, durch welche die Aufteilung des über die Auslaufleitung AL fließenden Wärmetransferfluidstromes auf den Rücklaufleitungsabschnitt RL und den Rückführungsleitungsabschnitt RF festgelegt werden kann. Das Ventil kann als nach Maßgabe einer externen Steuereinheit gesteuertes Ventil oder insbesondere auch als selbsttätig temperaturabhängig regelndes Ventil ausgebildet sein. Durch den gezeigten Schaltungsaufbau wird erreicht, dass im Grunde über den Vorlaufleitungsabschnitt VL nur eine Fluidmenge in den unter Einschluss des Rückführungsleitungsabschnitts RF gebildeten Sekundärkreis eintreten kann, die dem durch das Ventil 28 eingestellten und in den Rückleitungsabschnitt RL abfließenden Volumenstrom entspricht. Unabhängig von dem durch das Ventil 28 festgelegten Abflussvolumenstrom kann über die Sekundärkreispumpe SP ein gewünschter Durchsatz des Wärmetransferfluides durch die Verdampfereinrichtung VD eingestellt werden.

Die Verzweigungsstelle TS1 bildet bei dieser Ausführungsform eine Mischstelle, an welcher das über den Rückführungsleitungsabschnitt RF zurückgeführte Wärmetransferfluid mit dem über den Vorlaufleitungsabschnitt VL zufließenden Fluidstrom zusammentrifft. In dem unter Einschluss des Rückführungsleitungsabschnitts RF gebildeten Sekundärkreis können Fluidtemperaturen eingestellt werden, die weit unter der Temperatur des über den Vorlaufleitungsabschnitt VL zufließenden Wärmetransferfluides liegen. Hierdurch wird die thermische und strukturmechanische Belastung der Wärmetauschbereiche der Verdampfereinrichtung VD reduziert. Durch Erfassung der Ein- und Austrittstemperaturen des Wärmetransferfluides an der Verdampfereinrichtung über die Ein- und Ausgangstemperaturerfassungsorgane NTC 1 und NTC 3 kann über die Sekundärkreispumpe SP die Wärmetauschleistung der Verdampfereinrichtung VD mit hoher Regeldynamik abgestimmt werden.

Figur 2b zeigt eine Ausführungsform des Wärmetauschsystems, die in ihrem Aufbau im wesentlichen der vorangehend beschriebenen Ausführungsform gemäß Figur 2a entspricht, jedoch zusätzlich um eine Beipassleitung BL erweitert ist. Über die Beipassleitung BL wird es möglich, im Bereich des unter Einschluss des Rückführungsleitungsabschnitts RF gebildeten Sekundärkreises die Verdampfereinrichtung VD zu überbrücken. Die Beipassleitung BL ist über ein Stellventil SV mit dem Rücklaufleitungsabschnitt RL gekoppelt. Durch die derart gezeigte Einbindung der Beipassleitung BL wird es möglich, über das Stellventil SV zusätzlich Einfluss auf das Mischungsverhältnis der über den Vorlaufleitungsabschnitt VL und den Rückführungsleitungsabschnitt RF an der Verzweigungsstelle TS1 zusammenfließenden Volumenströme zu nehmen. Durch diese Maßnahme kann die Temperatur des innerhalb des Sekundärkreises umgewälzten Wärmetransferfluides mit nochmals erhöhter Regeldynamik auf die geforderte Verdampferleistung abgestimmt werden und auch einer verbauten Abgasrückführeinrichtung gestellt werden.

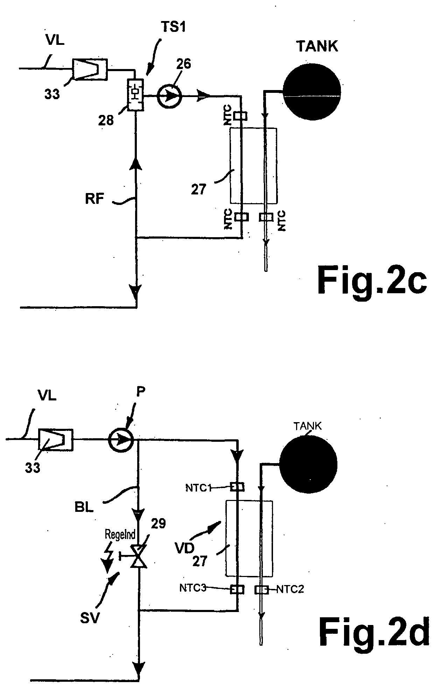

Figur 2c zeigt eine vierte Variante des erfindungsgemäßen Wärmetransfersystems, bei welcher das Ventil 28 nunmehr an der Verzweigungsstelle TS1 vorgesehen ist. Über das Ventil 28 kann dabei insbesondere der Zustrom des über den Vorlaufleitungsabschnitt VL zugeführten Wärmetransferfluides in den unter Einschluss des Rückführungsleitungsabschnitts RF gebildeten Sekundärkreis gesteuert werden.

Figur 2d zeigt eine fünfte Variante, bei welcher eine vom Zustrom über den Vorlaufleitungsabschnitt VL abweichende Einstellung des durch die Verdampfereinrichtung VD geführten Wärmetranferfluidvolumenstroms durch eine, die Verdampfereinrichtung überbrückende und mit einem Stellventil SV versehene Beipassleitung BL erreichbar ist. Der hier gezeigte Systemaufbau erlaubt es, die Pumpe P ungeregelt zu betreiben und die Aufteilung der über die Verdampfereinrichtung VD und die Beipassleitung BL abfließenden Fluidströme entsprechend dem Verhältnis der Strömungswiderstände der beiden Fluidwegabschnitte einzustellen. Der Strömungswiderstand des Beipassleitungsabschnitts BL kann hierbei über das Stellventil SV in einem vorgegebenen Bereich variabel eingestellt werden. Die Ansteuerung des Stellventils SV kann über eine Steuereinrichtung nach Maßgabe der momentan geforderten Verdampferleistung sowie der durch die Temperaturerfassungsorgane NTC 1, NTC 2 und NTC 3 erfassten Signale gesteuert werden.

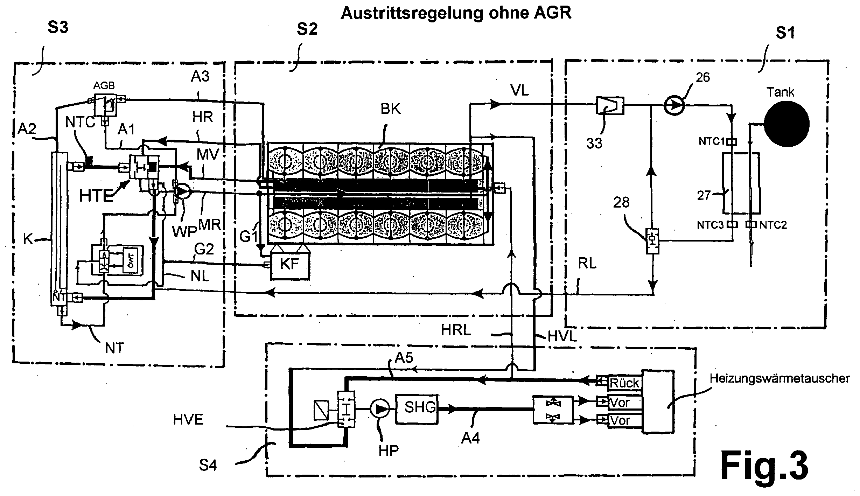

Figur 3 zeigt einen konkreten Anwendungsfall des vorangehend in Verbindung mit Figur 2a beschriebenen Wärmetransfersystems, zur Erzeugung gasförmigen Wasserstoffs für eine wasserstoffbetriebene Brennkraftmaschine BK eines Kraftfahrzeugs. Für das gezeigte Verdampfersystem gelten die Ausführungen zu Figur 2a sinngemäß. Der Vorlaufleitungsabschnitt VL steht mit einem in der Brennkraftmaschine BK ausgebildeten Wassermantelsystem in Verbindung. Der Abzweigungsort des Vorlaufleitungsabschnitts VL ist derart gewählt, dass über den Vorlaufleitungsabschnitt nach Inbetriebnahme der Brennkraftmaschine möglichst frühzeitig das Wärmetransferfluid (hier das Motorkühlwasser) auf einem hohen Temperaturniveau zur Verfügung steht. Der Rücklaufleitungsabschnitt RL ist gemäß einem besonderen Aspekt der vorliegenden Erfindung derart an den verbraucherseitigen Wärmetransferkreis angekoppelt, dass über den Rücklaufleitungsabschnitt RL zurückfließendes Fluid, in den Niedertemperaturbereich des verbraucherseitigen Wärmetransferkreises einspeisbar ist. Bei dieser Ausführung ist der Rücklaufleitungsabschnitt mit einem in den Niedertemperaturbereich eines Fahrzeugkühlers K führenden Leitungsabschnitt gekoppelt, so dass der Rücklauf des Wärmetransferfluides durch den Rücklaufleitungsabschnitt RL gegen einen geringen und von der Motordrehzahl nicht übermäßig stark beeinflussten Gegendruck erfolgt.

Das hier gezeigte Kühlmittelkreislaufsystem kann in vier Untersysteme S1, S2, S3, S4 unterteilt werden. Das Untersystem S1 entspricht in seinem Aufbau dem vorangehend in Verbindung mit Figur 2a beschriebenen System. Bei dem Untersystem S2 handelt es sich um das im Bereich des hier als Brennkraftmaschine BK ausgebildeten Verbrauchers gebildete Wärmetransfersystem zur Aufnahme der durch den Verbraucher erzeugten Wärme. Bei dem System S3 handelt es sich um ein Abwärmesystem zur Ableitung von im Überschuss anfallender Wärme an die Umgebung durch einen Kühlwasserwärmetauscher K und eine Getriebeölkühlreinrichtung umfassen kann. Das Untersystem S4 bildet ein Komfort-Heizsystem zur Heizung eines Fahrgastraumes des Kraftfahrzeugs.

Das Untersystem S1 ist mit dem Untersystem S2 über den Vorlaufleitungsabschnitt VL und den Rücklaufleitungsabschnitt RL gekoppelt. Das Untersystem S2 kommuniziert mit dem Untersystem S3 über eine Motorvorlaufleitung MV und eine Motorrücklaufleitung MR. Bei dem hier eingezeichneten Leitungsabschnitt HR handelt es sich um eine Heizungsrücklaufleitung, die zwar durch den Blockbereich der Brennkraftmaschine hindurchgeführt ist, jedoch nicht unmittelbar mit den blockseitigen Kühlmittelkanälen kommuniziert. Im Bereich des Untersystems S2 ist ferner auch ein wassergekühlter Generator KF vorgesehen, der über Leitungen G1, G2, in den Kühlkreislauf eingebunden ist.

Das Abwärmesystem S3 umfasst den Kühlwasserwärmetauscher K, eine mechanische Wasserpumpe WP, eine Thermostateinrichtung HTE, einen Kühlwasserausgleichsbehälter AGB und einen Ölwärmetauscher ÖWT. Der Kühlwasserausgleichsbehälter AGB ist über eine Anschlussleitung A1 an den Vorlaufbereich der Wasserpumpe WP angekoppelt. Der Ausgleichsbehälter ist weiterhin über Entlüftungsleitungen A2, A3 mit dem Kühler K bzw. den zylinderkopfseitigen Kühlkanälen der Brennkraftmaschine BK gekoppelt. Durch die Thermostateinrichtung HTE wird es möglich, in Abhängigkeit von der Temperatur der über die Leitungsabschnitte HR und MV zuströmenden Fluidströme eine Zusammenfassung und Weiterleitung derselben zum Kühler K oder auch unmittelbar zum Vorlaufbereich der Wasserpumpe WP zu veranlassen. Im Bereich des Ölwärmetauschers ÖWT ist eine Regelpatrone vorgesehen, durch welche temperaturgeführt der Fluiddurchsatz durch den Niedertemperaturrücklauf NT wie auch durch eine Nebenleitung NL einstellbar ist.

Das Untersystem S4 ist über eine Heizungsvorlaufleitung HVL und eine Heizungsrücklaufleitung HRL in den Wärmetransferkreis eingebunden. Das Heizungssystem S4 umfasst einen Heizungswärmetauscher mit mehreren über separate Vorlaufabschnitte ansteuerbaren Wärmetauschabschnitten. Das Heizungssystem S4 umfasst weiterhin eine Standheizung SHG zur selektiven Aufheizung des dem Heizungswärmetauscher über einen Leitungsabschnitt A4 zufließenden, bedarfsweise durch eine Hilfspumpe HP geförderten Fluidstromes.

Im Bereich des Systems S4 ist eine Heizventileinrichtung HVE vorgesehen, durch welche die Heizungsvorlaufleitung HVL abgesperrt werden kann und über eine Überbrückungsleitung A5 der Eingang der Hilfspumpe HP mit dem Rücklauf des Heizungswärmetauschers koppelbar ist.

Gemäß einem besonderen Aspekt der vorliegenden Erfindung ist es möglich, das mit einer Standheizungseinrichtung ausgestattete Untersystem S4 derart mit dem Untersystem S1, d.h. mit der Wasserstoffverdampfungseinrichtung gekoppelt, dass selektiv auch eine Wärmezufuhr über die Standheizung SHG erfolgen kann. Lediglich beispielhaft ist diesbezüglich in Strichlinien eine Hilfsleitungseinrichtung HL1 dargestellt, über welche ein Fluidabzug stromabwärts der Standheizung SHG erfolgen kann. Die Aufschaltung der Hilfsleitungseinrichtung HL1 kann durch ein Ventil V2 erfolgen. Es ist möglich, eine Rücklaufleitung (nicht dargestellt) vorzusehen, über welche eine Fluidrücklauf aus dem System S1 unter Umgehung der Systeme S2, S3 ermöglicht ist. ("kleiner parallel Heizkreis")

Es ist möglich, im Bereich des Systems S1, insbesondere in der Wärmetauschstrecke zwischen den Temperatursensoren NTC1, NTC2 eine Enteisungheizeinrichtung vorzusehen, durch welche etwaige Vereisungen im Bereich des Wärmetauschers gelöst werden können. Die Enteisungseinrichtung kann insbesondere als elektrische Widerstandsheizung ausgebildet sein. Insbesondere während einer Verbraucherkaltstartphase ist es möglich, die Enteisungsheizeinrichtung und ggf. auch die Standheizungseinrichtung derart zuzuschalten, dass durch diese Heizeinrichtungen einen zusätzlicher Wärmeeintrag erreicht wird.

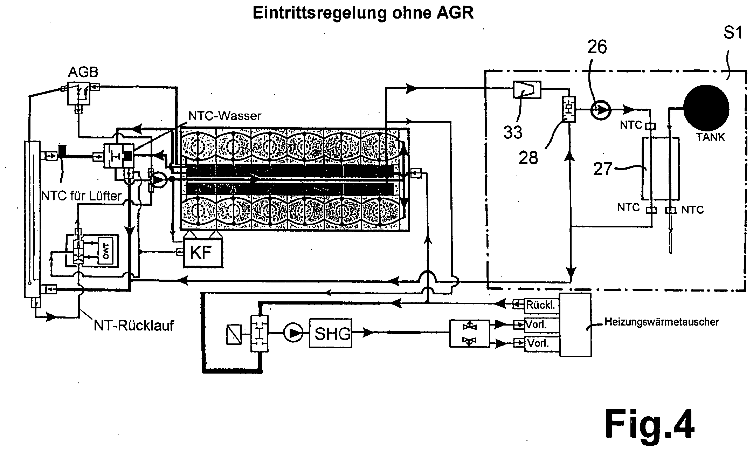

Figur 4 zeigt eine Ausführungsform des Kühlmittelkreislaufs für ein Kraftfahrzeug mit einer Ausgestaltung des Kraftstoffverdampfungssystems S1 gemäß Figur 2c. Die Ausführungen zu Figur 3 gelten hierzu sinngemäß.

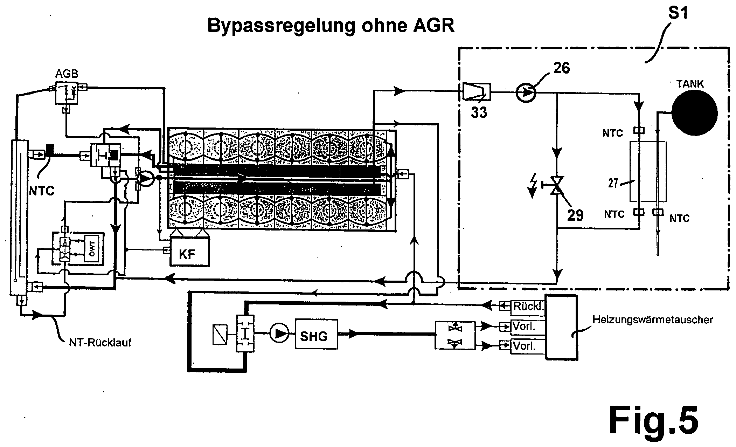

Figur 5 zeigt eine Ausgestaltung des Kühlmittelkreislaufs unter Verwendung eines Verdampfungssystems S1 gemäß Figur 2d. Im übrigen gelten die Ausführungen zu Figur 3 auch hier sinngemäß.

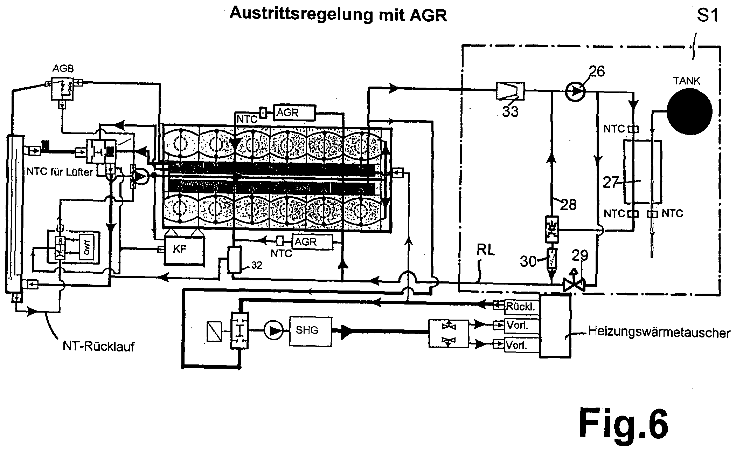

Figur 6 zeigt eine Ausführungsform des Kühlmittelkreislaufs bei einer, mit einer Abgasrückführeinrichtung AGR ausgestatteten, wasserstoffbetriebenen Brennkraftmaschine. Das Verdampfungssystem S1 entspricht der Ausführungsform gemäß Figur 2b. Die Brennkraftmaschine ist auch hier lediglich beispielhaft als V-Motor ausgebildet. Jeder Zylinderbank der Brennkraftmaschine ist eine Abgasrückführeinrichtung AGR zugeordnet. Jede Abgasrückführeinrichtung umfasst einen in den Fluidkreislauf eingebundenen Wärmetauscher. Die Kühlmittelbeaufschlagung dieser Wärmetauscher erfolgt über den Rücklaufleitungsabschnitt RL unter Einbindung eines Thermostatventils 32. Durch eine, hier nicht näher dargestellte Steuereinrichtung ist es möglich, das Verdampfungssystem S1 derart zu betreiben, dass das über die Rücklaufleitung RL fließende Wärmetransferfluid eine, auf einen geforderten Kühleffekt im Bereich des Abgasrückführsystems abgestimmte Rücklauftemperatur aufweist.

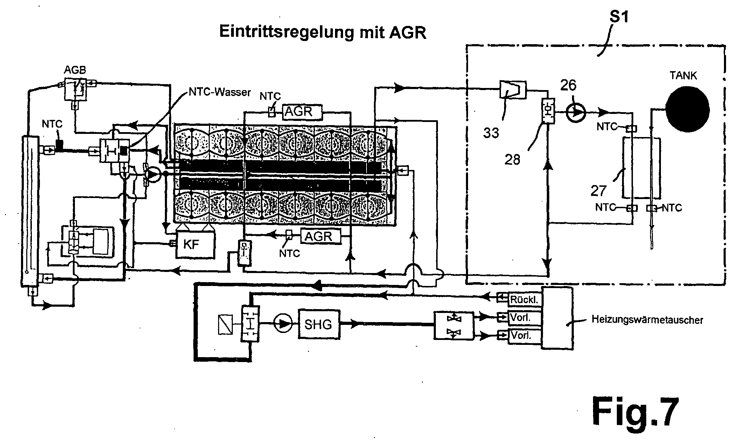

Figur 7 zeigt eine Ausführungsform des Kühlmittelkreislaufs einer Brennkraftmaschine mit einer, in gleicher Weise wie vorangehend in Verbindung mit Figur 6 beschrieben, in den Kühlmittelkreislauf eingebundenen Abgasrückführeinrichtung. Der Aufbau des Kraftstoffverdampfungssystems S1 entspricht der Variante gemäß Figur 2c.

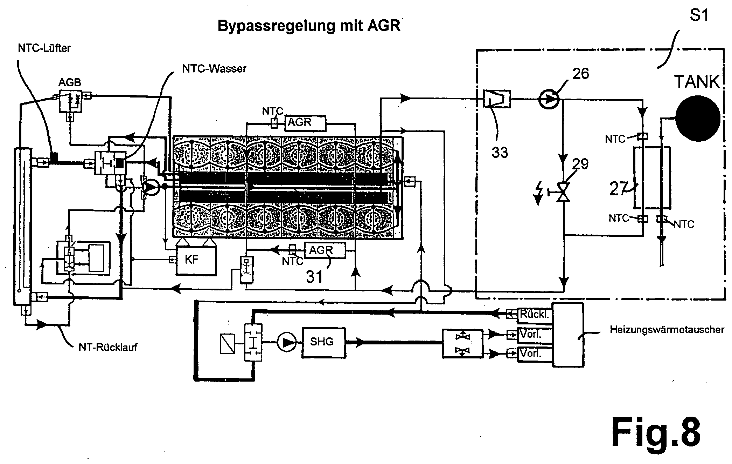

Figur 8 zeigt eine weitere Ausführungsform des Kühlmittelkreislaufs für eine wassergekühlte und mit einer Abgasrückführeinrichtung ausgestattete Brennkraftmaschine. Das Verdampfungssystem S1 entspricht in seinem Aufbau der in Verbindung mit Figur 2d beschriebenen Variante. Im übrigen gelten die Ausführungen zu Figur 3 sowie zu den Figuren 6 und 7 sinngemäß.

Die vorangehend beschriebenen erfindungsgemäßen Systeme zeichnen sich sowohl hinsichtlich der H2-Temperaturen als auch der Kühlmitteltemperaturen durch eine hohe Regelgüte aus. Durch die Abzweigung des Vorlaufs zum H2-Wärmetauscher aus dem Blockbereich, beispielsweise dem V-Raum einer Brennkraftmaschine, sowie durch die Anbindung des Rücklaufs an den Kühlervorlauf ergibt sich eine verminderte Abhängigkeit des über den H2-Wärmetauscher fließenden Kühlmittelvolumenstroms von der Motordrehzahl. Weiterhin können bedarfsweise zuverlässig hohe Vorlauftemperaturen am H2-Wärmetauscher erreicht werden. Bei der beschriebenen Beipassvariante wird der Einspeisung großer Volumenströme in den Kühlwasserrücklauf durch den im Zusammenspiel mit dem Hauptthermostat aufgebauten Regelkreis Rechnung getragen.

Durch Regelung der H2-Temperatur über den kleinen Kreislauf am H2-Wärmetauscher unter Verwendung eines Thermostats, oder eines elektrisch angesteuerten Ventils, kann lokal im H2-Wärmetauscher ein niedrigeres Kühlmitteltemperaturniveau als im restlichen Kühlkreislauf eingestellt werden. Damit kann die ansonsten große Temperaturdifferenz zwischen dem Kraftstoff, insbesondere Wasserstoff, und dem Kühlmittel am H2-Wärmetauscher reduziert werden, wodurch sich hinsichtlich der thermischen und mechanischen Belastung der Komponenten des H2-Wärmetauschers Vorteile ergeben.

Bedarfsweise ist eine Beipassregelung und eine Pumpenregelung über den H2-Wärmetauscher (große Volumenströme im Rücklauf) zum "konventionellen" Kühlkreislauf möglich.

Durch Verwendung der angegebenen AGR-Kühler wird eine NOX-Reduktion ermöglicht. Die Anströmung der AGR-Kühler kann ventil- und thermostatgesteuert erfolgen. Das Ventil dient zur Erhöhung des Volumenstroms im H2-Wärmetauscher-Rücklauf (unabhängig vom Lastfall des H2-Wärmetauschers). Das Thermostat dient unter anderem der Verbesserung des Aufheizverhaltens (Verbrauchsreduzierung, Heizleistungssteigerung). Im kritischen Kaltstartfall können über den AGR-Beipass Wärmeverluste durch das Aufheizen der AGR-Kühler ausgeschlossen werden (kein abgasseitiger AGR-Betrieb) und der Druckverlust der AGR-Kühler eliminiert werden. Dies führt zu einem großen Betriebstemperaturbereich, insbesondere beim Kaltstart. Bei Erwärmung des Kühlwassers im AGR-Wärmetauscher (abgasseitiger AGR-Betrieb) wird der AGR-Kühler-Beipass geschlossen und das Kühlwasser komplett über den AGR-Wärmetauscher geführt. Die Druckverluste in den AGR-Kühlern sind bei höheren Kühlmitteltemperaturen (Viskositätsänderung) gering. Zur Regelung sollte im Beipass-Betrieb ein kleiner Leckagevolumenstrom von den AGR-Kühlern zum Regelthermostat fließen, um das Temperatursignal an das Regelglied (zum Beispiel Wachselement) zu übermitteln.

Zum Schutz des H2-Wärmetauschers wird vorzugsweise jener Kühlmittelfilter 33 eingesetzt. Sind die Querschnitte der Kühlmittelpassagen im H2-Wärmetauscher sehr klein, kann es ansonsten durch Verunreinigungen im Kühlkreislauf (Glasfasern) zur Verlegung/Verstopfung des H2-Wärmetauschers kommen. Vorzugsweise ist der Kühlmittelfilter 33 unmittelbar vor dem H2-WT in das System eingebunden.

Die Regelbarkeit der Pumpe ermöglicht es, Schwankungen der Kühlmitteltemperaturen gering zu halten, dies führt zur Reduktion der H2-Temperaturuntschiede bei Teil- bzw. Volllast und entlastet das Bordnetz. Durch die Regelbarkeit der Pumpenleistung kann auch eine Kühlmitteleintrittstemperaturregelung am H2-WT umgesetzt werden, bei der die KM-Austrittstemperatur am H2-WT und somit auch die H2-Austrittstemperatur über den Kühlmittelvolumenstrom eingeregelt wird.

Die Temperatursensoren im Vor- und Rücklauf des H2-WTs können zur Regelung der Zusatzwasserpumpe herangezogen werden. Diese Sensoren können auch zur Erkennung eines möglichen Vereisens des H2-WTs genutzt werden (Vermeidung der Gefahr der Vorschädigung des H2-WTs) sowie zur Begrenzung der maximalen Motorleistung - oder bei bivalentem Betrieb zur Umschaltung in den Benzinbetrieb herangezogen werden. Die entsprechende Steuereinrichtung kann derart konfiguriert sein, dass diese nach Maßgabe eines Algorithmus arbeitet, der eine Plausibilitätsprüfung auf Grundlage der übertragenen Wärmemengen vornimmt. Jene Steuereinrichtung kann durch das CE-Steuergerät verwirklicht sein.

Die zur Förderung des Wärmetransferfluides durch den H2-Wärmetauscher vorgesehene Pumpe ist vorzugsweise als diagnosefähigen E-Pumpe ausgebildet und auf den Betrieb für den Clean Energy Anwendungsfall abgestimmt. Die Pumpe kann für einen Einsatz des System in einem Kraftfahrzeug im Hinblick auf den Kaltstartfall und den "normalen" Betriebsfall ausgelegt sein. Dadurch wird ein großer Betriebstemperaturbereich (ca. -25°C - ...) erreicht und eine Option für eine Leistungssteigerung (größere Motorleistung bei gleichzeitig höherer Heizleistung für den H2 WT) geschaffen. Eine Leistungsreduzierung des Motors bei Starttemperaturen unterhalb von z.B. -15°C kann ebenfalls durch entsprechende Konfiguration der Steuereinrichtung vorgesehen werden.

Die Ansteuerung der Pumpe erfolgt vorzugsweise über mehrere Kennfelder, durch welche die Motordrehzahl, die Kühlmittelaustrittstemperatur am H2-WT, die H2-Austrittstemperatur am H2-WT, die Kühlmitteltemperaturdifferenz am H2-WT (max. Auswahl über alle 4 Kennfelder) und die Pumpentemperatur (min. Auswahl) Berücksichtigt werden können.

Durch die Anbindung des Rücklaufs vom H2-WT in den Kühlervorlaufschlauch kann in vorteilhafter Weise eine zuverlässige Entlüftung direkt in den Ausgleichsbehälter erreicht werden. Es ist möglich, den H2-WT vor den Rücklauf vor dem Fahrzeugkühler ohne erhebliche Beeinträchtigung der Kühlleistung einzukoppeln.

Durch die Entkopplung von Heizungskreislauf (mit Standheizung) und H2-WT Kreislauf kann die Heizleistung erheblich gesteigert werden. Gleichzeitig ist im Standheizungsbetrieb die max. mögliche Heizleistung abrufbar. Mit der beschriebenen Einbindung des H2-WT wäre ein Standheizungsbetrieb unabhängig vom Fahrbetrieb möglich.

Durch die Anbindung des Rücklaufs vom H2-WT in den Kühlervorlaufschlauch kann im übrigen auch der wird der Druck im Kühlervorlaufschlauch erhöht und der Durchfluss über den Getriebeöl-WT vergrößert werden. Die Getriebeöltemperaturen werden dadurch nachhaltig reduziert.

Die aufgezeigte Einbindung des zur Kraftstoffverdampfung vorgesehenen Wärmetauschsystems erlaubt es die benötigte Wärmemenge ohne Verschlechterung der einzelnen Teilsysteme Motorkühlung, Motorölkühlung, Getriebeölkühlung und Heizung bereitzustellen.

Das erfindungsgemäße Verdampfungssystem zeichnet sich insbesondere durch die nachfolgend angegebenen Vorteile aus:
- Hohe Regelgüte, geringes Temperaturschwingungsverhalten des Kühlmittelkreislaufs und damit auch der Gas bzw. H2-Temperatur. Somit geringer Einfluss von Lastwechseln, Motordrehzahländerungen, Heizung Ein/Ausschalten auf die Fahrleistung (konst. H2-Temperatur bei Volllast => konst. max. Geschwindigkeit);
- Verringerung der Gefahr des Vereisens und Erkennung der Vereisung des H2-Wärmetauschers;
- An den Betriebszustand angepasste elektrische Bordnetzbelastung durch die Pumpe;
- Hohe Betriebssicherheit;
- Sichere Entlüftung des Kühlmittelkreislaufs;
- Hohe Heizleistung für Fahrzeuginnenraum (Komfort) im Fahr- und Standheizungsbetrieb;
- Optimale Nutzung der Kühlleistung des Fahrzeugkühlers;
- Reduzierung der Getriebeöltemperaturen (niedrigeres Temperaturkollektiv führt zu längerer Haltbarkeit);
- hohe Variabilität bezüglich Regelung der H2-Temperatur (Regelthermostat oder elektrisches Ventil, großer oder kleiner Volumenstrom in Vor-/Rücklauf zum H2-WT-Teilkreislauf möglich);
- Die Trennung von Primär- und Sekundärkreislauf erhöht die Sicherheit des Systems (H2 gelangt nicht in den primären Kühlkreislauf des Fahrzeugs). Darüber hinaus ist bei Arbeiten am H2-WT (z.B. Austausch) nicht das gesamte Kühlmittel aus dem Kühlkreislauf abzulassen bzw. der gesamte Kühlkreislauf zu entlüften. Im Sekundärkreislauf besteht bei entsprechender Werkstoffauswahl die Möglichkeit mit einer höheren Glykolkonzentration zu arbeiten und somit Vereisungen vorzubeugen (Vergrößerung des Betriebstemperaturbereichs beim Kaltstart). Die Glykolkonzentration im H2-WT ist damit unabhängig von Materialfreigaben im "konventionellen" Kühlkreislauf wählbar;
- Die Einbindung des H2-WTs in den Kühlkreislauf reduziert durch den Kälteeintrag am H2-WT die abzuführende Wärmemenge am Fahrzeugkühler. Bei monovalentem H2-Betrieb ist dadurch eine Reduzierung der Kühlerflächen/-tiefen (geringere Druckverluste bei Motorraumdurchströmung) möglich. Somit führt das Konzept der tiefkalten Speicherung von H2, bei gleichzeitiger Einbindung des H2-WTs in den Kühlkreislauf und entsprechender fahrzeugseitigen Anpassung (Kühlereintrittsflächen, ...) zur Verbesserung des ex-Werts und so zur Reduktion des Kraftstoffverbrauchs. Neben der cx-Wert Optimierung ergeben sich sowohl für den Fußgängerschutz als auch für das Design neue Möglichkeiten.

## Patentansprüche

1. System (S1), zur Verdampfung eines kryogen gespeicherten Kraftstoffs durch Nutzung von im Bereich eines Kraftstoffverbrauchers anfallender Wärme mit:
- einer Verdampfereinrichtung (VD), zur Verdampfung von aus einem Kraftstofftank (T) bezogenem Kraftstoff unter Einbringung von Verdampfungswärme (QD),
- einer Gasleitungseinrichtung (GL) zur Zuleitung des verdampften Kraftstoffes zu jenem Verbraucher,
- einem Wärmetransfersystem zur Aufnahme von Wärme, und
- einer, von einem Wärmetransferfluid durchströmten Kraftstoff-Wärmetauschereinrichtung (27), die Teil der Verdampfereinrichtung (VD) bildet, zur Bereitstellung der Verdampfungswärme (QD) durch einen aus dem Wärmetransfersystem bezogenen Wärmestrom, wobei die Kraftstoff-Wärmetauschereinrichtung (27) mit dem verbraucherseitigen Wärmetransfersystem unter Einschaltung eines Zwischenwärmetauschers (ZW) thermisch gekoppelt ist, **dadurch gekennzeichnet, dass**
- das Wärmetransfersystem im Bereich des Verbrauchers vorgesehen ist und zur Aufnahme von im Bereich des Verbrauchers anfallender Wärme dient und
- die Kraftstoff-Wärmetauschereinrichtung (27) mit dem Wärmetransfersystem über einen Vorlaufabschnitt (VL) und einen Rücklaufabschnitt (RL) derart gekoppelt ist, dass der zur Einbringung der Verdampfungswärme (QD) geforderte Durchsatz des Wärmetransferfluides durch die Kraftstoff-Wärmetauschereinrichtung (27), von dem Fluiddurchsatz durch den Vorlaufabschnitt (VL) und/oder den Rücklaufabschnitt (RL) abweichend einstellbar ist.

2. System (S1) nach Anspruch 1, **dadurch gekennzeichnet, dass** die Koppelung der Kraftstoff-Wärmetauschereinrichtung (27) unter Trennung der Fluidkreise in einen Primärkreis und wenigstens einen Sekundärkreis bewerkstelligt ist.

3. System (S1) nach Anspruch 2, **dadurch gekennzeichnet, dass** im Falle getrennter Fluidkreise unterschiedliche Wärmetransferfluide in dem jeweiligen Fluidkreis aufgenommen sind.

4. System (S1) nach wenigstens einem der Ansprüche 1 bis 3, **dadurch gekennzeichnet, dass** die Koppelung unter Einschluss einer Leitungsbrücke bewerkstelligt ist, die eine Teil-Rückführung eines aus der Kraftstoff-Wärmetauschereinrichtung (27) abfließenden Wärmetransferfluidstroms zur Eingangsseite der Kraftstoff-Wärmetauschereinrichtung (27) ermöglicht.

5. System (S1) nach wenigstens einem der Ansprüche 1 bis 4, **dadurch gekennzeichnet, dass** die Koppelung unter Einschluss einer Bypassleitung (BL) bewerkstelligt ist, zur Schaffung einer Fluidverbindung zwischen dem Vorlaufabschnitt (VL) und dem Rücklaufabschnitt (RL) unter Umgehung der Kraftstoff-Wärmetauschereinrichtung (27).

6. System (S1) nach wenigstens einem der Ansprüche 1 bis 5, **dadurch gekennzeichnet, dass** ein Eingangstemperaturerfassungsorgan (NTC1) vorgesehen ist, zur Erfassung der Eingangstemperatur des Wärmetransferfluides am Eingang der Kraftstoff-Wärmetauschereinrichtung (27).

7. System (S1) nach wenigstens einem der Ansprüche 1 bis 6, **dadurch gekennzeichnet, dass** ein Ausgangstemperaturerfassungsorgan (NTC3) vorgesehen ist, zur Erfassung der Ausgangstemperatur des Wärmetransferfluides am Ausgang der Kraftstoff-Wärmetauschereinrichtung (27).

8. System (S1) nach wenigstens einem der Ansprüche 1 bis 7, **dadurch gekennzeichnet, dass** eine Pumpeneinrichtung (34) vorgesehen ist, zur Förderung des Wärmetransferfluides durch die Kraftstoff-Wärmetauschereinrichtung (27).

9. System (S1) nach wenigstens einem der Ansprüche 1 bis 8, **dadurch gekennzeichnet, dass** Stellglieder, insbesondere Ventile vorgesehen sind, zur Einstellung der Durchflussbedingungen durch die Kraftstoff-Wärmetauschereinrichtung (27),

10. System (S1) nach wenigstens einem der Ansprüche 4 oder 5, **dadurch gekennzeichnet, dass** Stellglieder, insbesondere Ventile vorgesehen sind, zur Einstellung der Durchflussbedingungen durch die Bypassleitung (BL).

11. System (S1) nach wenigstens einem der Ansprüche 1 bis 10, **dadurch gekennzeichnet, dass** eine Steuereinrichtung (C) vorgesehen ist, zur Einstellung des Fluiddurchsatzes durch den Vorlauf und den Rücklaufabschnitt (RL) und/oder die Kraftstoff-Wärmetauschereinrichtung (27) derart, dass sich auf den momentanen Betriebszustand des Verbrauchers abgestimmte Systemeinstellungen ergeben.

12. System (S1) nach wenigstens einem der Ansprüche 1 bis 11, **dadurch gekennzeichnet, dass** die Kraftstoff-Wärmetauschereinrichtung (27) derart betrieben wird, dass durch den ausgangsseitig abfließenden Wärmetransferfluidstrom ein Kühlpotential für den Verbraucher, insbesondere Motor, und/oder ein Abgasrückführsystem und/oder ein Ladeluftkühlsystem und/oder ein Fahrzeugklimatisierungssystem und/oder Getriebeeinrichtungen bereitsteht.

13. System (S1) nach wenigstens einem der Ansprüche 1 bis 12, **dadurch gekennzeichnet, dass** die Abzweigung des Wärmetransferfluids aus einem Bereich des Verbrauchers erfolgt, der ein zur Aufbringung der Verdampfungsleistung durch die Kraftstoff-Wärmetauschereinrichtung (27) ausreichend hohes Temperaturpotential zu Verfügung stellt.

14. System (S1) nach Anspruch 13, **dadurch gekennzeichnet, dass** die Abzweigung aus einem schnellheizenden und/oder hochtemperatur Abschnitt des verbraucherseitigen Wärmetransfersystems erfolgt.

15. System (S1) nach wenigstens einem der Ansprüche 1 bis 14, **dadurch gekennzeichnet, dass** der durch den Wärmebezug der Kraftstoff-Wärmetauschereinrichtung (27) gekühlte Wärmetransferfluidstrom stromaufwärts eines Kühlwasserwärmetauschers (K) in den Kühlfluidstrom eingespeist wird.

16. System (S1) nach wenigstens einem der Ansprüche 1 bis 15, **dadurch gekennzeichnet, dass** der Verbraucher eine Brennkraftmaschine (BK) ist.

17. System (S1) nach wenigstens einem der Ansprüche 1 bis 16, **dadurch gekennzeichnet, dass** der Verbraucher eine Brennstoffzelle ist.

18. System (S1) nach wenigstens einem der Ansprüche 1 bis 17, **dadurch gekennzeichnet, dass** das Wärmetransfersystem den Kühlmittelkreis des Verbrauchers bildet.

19. System (S1) nach wenigstens einem der Ansprüche 1 bis 18, **dadurch gekennzeichnet, dass** das Wärmetransfersystem mit einem Abgasrückführungssystem kooperiert.

20. System (S1) nach wenigstens einem der Ansprüche 1 bis 19, **dadurch gekennzeichnet, dass** dass das Abwärmesystem einen Schmierstoffkreis des Verbrauchers oder Abtriebsstrangkomponenten umfasst.

21. System (S1) nach wenigstens einem der Ansprüche 1 bis 20, **dadurch gekennzeichnet, dass** der Wärmetransfer in der Kraftstoff-Wärmetauschereinrichtung (27) selektiv nach dem Gleich- oder Gegenstromprinzip erfolgt.

22. System (S1) nach wenigstens einem der Ansprüche 1 bis 21, **dadurch gekennzeichnet, dass** der Kraftstoff zumindest temporär in flüssigem Zustand in die Kraftstoff-Wärmetauschereinrichtung (27) gelangt.

23. System (S1) nach wenigstens einem der Ansprüche 1 bis 22, **dadurch gekennzeichnet, dass** als Kraftstoff Wasserstoff verwendet wird.

24. System (S1) nach wenigstens einem der Ansprüche 1 bis 23, **dadurch gekennzeichnet, dass** der Kraftstoff im Tank eine Temperatur von weniger als 150K, im Falle von Wasserstoff insbesondere weniger als 20K aufweist.

25. Verfahren zur Verdampfung eines kryogen gespeicherten Kraftstoffs, insbesondere Wasserstoff, bei welchem der Kraftstoff aus einer Tankeinrichtung abgeleitet und über eine als Wärmetauscher ausgebildete Verdampfereinrichtung (VD) erwärmt und verdampft wird, wobei der zur fortlaufenden Verdampfung des Kraftstoffs erforderliche Wärmestrom über einen temperierten Wärmetransferfluidstrom bezogen wird, der aus einem verbraucherseitig vorgesehenen Wärmetransfersystem abgeleitet wird,
**dadurch gekennzeichnet, dass**
- der aus dem verbraucherseitigen Wärmetransfersystem abgeleitete Fluidstrom in einem Primärkreis geführt wird,
- ein durch die Verdampfereinrichtung (VD) geführter Verdampferfluidstrom in einem Sekundärkreis geführt wird,
- der aus dem verbraucherseitigen Wärmetransfersystem abgeleitete Fluidstrom und der durch die Verdampfereinrichtung (VD) geführter Verdampferfluidstrom thermisch gekoppelt sind und
- der aus dem verbraucherseitigen Wärmetransfersystem abgeleitete Fluidstrom und der durch die Verdampfereinrichtung (VD) geführte Verdampferfluidstrom in Abhängigkeit vom Betriebszustand des Verbrauchers zumindest phasenweise auf verschiedene Pegel eingestellt werden, um den Wärmeeintrag in den Kraftstoff über den Massenstrom des Wärmeträgerfluides einzustellen, der zumindest phasenweise von dem zum Wärmeabzug aus dem Verbraucher veranlassten Massenstrom abweicht.

26. Verfahren nach Anspruch 25, **dadurch gekennzeichnet, dass** die Einstellung der Fluidströme unter der Maßgabe erfolgt, die zur Bereitstellung des gasförmigen Kraftstoffs, insbesondere Wasserstoffes, erforderliche Wärmemenge im Bereich vorgegebener Temperaturgradienten bereitzustellen.

27. Verfahren nach wenigstens einem der Ansprüche 25 oder 26, **dadurch gekennzeichnet, dass** die Einstellung der Fluidströme unter der Maßgabe erfolgt, die zur Bereitstellung des gasförmigen Wasserstoffes erforderliche Wärmemenge unter einer vorgegebenen Eintrittstemperatur des Verdampferfluidstroms bereitzustellen.

28. Verfahren nach wenigstens einem der Ansprüche 25 bis 27, **dadurch gekennzeichnet, dass** die Einstellung der Fluidströme unter der Maßgabe erfolgt, die zur Bereitstellung des gasförmigen Wasserstoffes erforderliche Wärmemenge bei Erreichen einer vorgegebenen Austrittstemperatur des Verdampferfluidstromes bereitzustellen.

## Claims

1. System (S1) for evaporating a cryogenically stored fuel using heat generated in the region of a fuel consumer, having:
- an evaporator device (VD) for the evaporation of fuel drawn from a fuel tank (T) by introduction of evaporation heat (QD),
- a gas line device (GL) for conducting the evaporated fuel to said consumer,
- a heat transfer system for receiving heat, and
- a fuel heat exchanger device (27) which is flowed through by a heat transfer fluid and which forms part of the evaporator device (VD) and which serves for providing the evaporation heat (QD) by means of a heat flow drawn from the heat transfer system, wherein the fuel heat exchanger device (27) is thermally coupled to the consumer-side heat transfer system via an intermediate heat exchanger (ZW), **characterized in that**
- the heat transfer system is provided in the region of the consumer and serves for receiving heat generated in the region of the consumer, and
- the fuel heat exchanger device (27) is coupled to the heat transfer system via a feed section (VL) and a return section (RL) such that the throughput of the heat transfer fluid through the fuel heat exchanger device (27) that is required for the introduction of the evaporation heat (QD) can be set to differ from the fluid throughput through the feed section (VL) and/or the return section (RL).

2. System (S1) according to Claim 1, **characterized in that** the coupling of the fuel heat exchanger device (27) is realized with a separation of the fluid circuits into a primary circuit and at least one secondary circuit.

3. System (S1) according to Claim 2, **characterized in that**, in the case of separate fluid circuits, the respective fluid circuits contain different heat transfer fluids.

4. System (S1) according to at least one of Claims 1 to 3, **characterized in that** the coupling is realized with the inclusion of a line bridge which allows a heat transfer fluid flow flowing out of the fuel heat exchanger device (27) to be partial recirculated to the input side of the fuel heat exchanger device (27).

5. System (S1) according to at least one of Claims 1 to 4, **characterized in that** the coupling is realized with the inclusion of a bypass line (BL) in order to create a fluid connection between the feed section (VL) and the return section (RL) which bypasses the fuel heat exchanger device (27).

6. System (S1) according to at least one of Claims 1 to 5, **characterized in that** an inlet temperature detection element (NTC1) is provided for detecting the inlet temperature of the heat transfer fluid at the inlet of the fuel heat exchanger device (27).

7. System (S1) according to at least one of Claims 1 to 6, **characterized in that** an outlet temperature detection element (NTC3) is provided for detecting the outlet temperature of the heat transfer fluid at the outlet of the fuel heat exchanger device (27).

8. System (S1) according to at least one of Claims 1 to 7, **characterized in that** a pump device (34) is provided for conveying the heat transfer fluid through the fuel heat exchanger device (27).

9. System (S1) according to at least one of Claims 1 to 8, **characterized in that** actuating elements, in particular valves, are provided for setting the throughflow conditions through the fuel heat exchanger device (27).

10. System (S1) according to at least one of Claims 4 and 5, **characterized in that** actuating elements, in particular valves, are provided for setting the throughflow conditions through the bypass line (BL).

11. System (S1) according to at least one of Claims 1 to 10, **characterized in that** a control device (C) is provided for setting the fluid throughput through the feed and the return section (RL) and/or the fuel heat exchanger device (27) so as to yield system settings adapted to the present operating state of the consumer.

12. System (S1) according to at least one of Claims 1 to 11, **characterized in that** the fuel heat exchanger device (27) is operated such that a cooling potential for the consumer, in particular engine, and/or an exhaust-gas recirculation system and/or a charge-air cooling system and/or a vehicle air-conditioning system and/or transmission devices, is provided by the heat transfer fluid flow flowing out at the outlet side.

13. System (S1) according to at least one of Claims 1 to 12, **characterized in that** the heat transfer fluid is branched off from a region of the consumer which provides a temperature potential high enough for the imparting of the evaporation power by means of the fuel heat exchanger device (27).

14. System (S1) according to Claim 13, **characterized in that** the branching is performed from a fast-heating and/or high-temperature section of the consumer-side heat transfer system.

15. System (S1) according to at least one of Claims 1 to 14, **characterized in that** the heat transfer fluid flow cooled as a result of the drawing of heat by the fuel heat exchanger device (27) is fed into the cooling fluid flow upstream of a cooling water heat exchanger (K).

16. System (S1) according to at least one of Claims 1 to 15, **characterized in that** the consumer is an internal combustion engine (BK).

17. System (S1) according to at least one of Claims 1 to 16, **characterized in that** the consumer is a fuel cell.

18. System (S1) according to at least one Claims 1 to 17, **characterized in that** the heat transfer system forms the coolant circuit of the consumer.

19. System (S1) according to at least one of Claims 1 to 18, **characterized in that** the heat transfer system cooperates with an exhaust-gas recirculation system.

20. System (S1) according to at least one of Claims 1 to 19, **characterized in that** the waste-heat system comprises a lubricant circuit of the consumer or drivetrain components.

21. System (S1) according to at least one of Claims 1 to 20, **characterized in that** the heat transfer in the fuel heat exchanger device (27) takes place selectively in accordance with the codirectional-flow or counter-flow principle.

22. System (S1) according to at least one of Claims 1 to 21, **characterized in that** the fuel passes at least temporarily in the liquid state into the fuel heat exchanger device (27).

23. System (S1) according to at least one of Claims 1 to 22, **characterized in that** hydrogen is used as fuel.

24. System (S1) according to at least one of Claims 1 to 23, **characterized in that** the fuel in the tank has a temperature of lower than 150 K, in the case of hydrogen in particular lower than 20 K.

25. Method for evaporating a cryogenically stored fuel, in particular hydrogen, in which method the fuel is derived from a tank device and is heated and evaporated by means of an evaporator device (VD) in the form of a heat exchanger, wherein the heat flow required for the continuous evaporation of the fuel is drawn from a temperature-controlled heat transfer fluid flow derived from a heat transfer system provided at a consumer side, **characterized in that**
- the fluid flow derived from the consumer-side heat transfer system is conducted in a primary circuit,
- an evaporator fluid flow conducted through the evaporator device (VD) is conducted in a secondary circuit,
- the fluid flow derived from the consumer-side heat transfer system and the evaporator fluid flow conducted through the evaporator device (VD) are thermally coupled, and
- the fluid flow derived from the consumer-side heat transfer system and the evaporator fluid flow conducted through the evaporator device (VD) are, in a manner dependent on the operating state of the consumer, set to different levels at least in certain phases in order to adjust the introduction of heat into the fuel by way of the mass flow of the heat carrier fluid, which, at least in certain phases, differs from the mass flow brought about for the drawing of heat from the consumer.

26. Method according to Claim 25, **characterized in that** the setting of the fluid flows is performed with the aim of providing the heat quantity required for the provision of the gaseous fuel, in particular hydrogen, in the range of predefined temperature gradients.

27. Method according to at least one of Claims 25 and 26, **characterized in that** the setting of the fluid flows is performed with the aim of providing the heat quantity required for the provision of the gaseous fuel with a predefined inlet temperature of the evaporator fluid flow.

28. Method according to at least one of Claims 25 to 27, **characterized in that** the setting of the fluid flows is performed with the aim of providing the heat quantity required for the provision of the gaseous hydrogen while attaining a predefined outlet temperature of the evaporator fluid flow.

## Revendications

1. Système (S1) destiné à l'évaporation d'un carburant, stocké de manière cryogénique, à l'aide de la chaleur produite dans la zone d'un consommateur de carburant, ledit système comprenant :
- un moyen évaporateur (VD) destiné à l'évaporation du carburant, pris sur un réservoir de carburant (T), par introduction de chaleur d'évaporation (QD),
- un moyen de conduite de gaz (GL) destiné à amener le carburant vaporisé à ce consommateur,
- un moyen de transfert de chaleur destiné à absorber la chaleur, et
- un moyen échangeur de chaleur de carburant (27) à travers lequel s'écoule un fluide caloporteur, qui fait partie du moyen d'évaporation (VD), et qui est destiné à produire de la chaleur d'évaporation (QD) par le biais d'un flux de chaleur pris sur le système de transfert de chaleur, le moyen échangeur de chaleur de carburant (27) étant couplé thermiquement au système de transfert de chaleur côté consommateur avec interposition d'un échangeur de chaleur intermédiaire (ZW),
**caractérisé en ce que**
- le système de transfert de chaleur est prévu dans la zone du consommateur et sert à absorber de la chaleur produite dans la zone du consommateur, et
- le moyen échangeur de chaleur de carburant (27) est couplé au système de transfert de chaleur par le biais d'une portion montante (VL) et d'une portion de retour (RL) de telle sorte que le débit du fluide caloporteur à travers le moyen échangeur de chaleur de carburant (27) qui est requis pour l'introduction de la chaleur d'évaporation (QD) puisse être réglé différemment du débit de fluide à travers la portion montante (VL) et/ou la portion de retour (RL).

2. Système (S1) selon la revendication 1,
**caractérisé en ce que**
le couplage du moyen échangeur de chaleur de carburant (27) est réalisé par séparation des circuits de fluide en un circuit primaire et au moins un circuit secondaire.

3. Système (S1) selon la revendication 2, **caractérisé en ce que**, dans le cas de circuits de fluide séparés, différents fluides caloporteurs sont reçus dans le circuit de fluide respectif.

4. Système (S1) selon l'une au moins des revendications 1 à 3, **caractérisé en ce que** le couplage est réalisé avec inclusion d'un pont de conduit qui permet une recirculation partielle d'un flux de fluide caloporteur, sortant du moyen échangeur de chaleur de carburant (27), vers le côté entrée du moyen échangeur de chaleur de carburant (27).

5. Système (S1) selon l'une au moins des revendications 1 à 4, **caractérisé en ce que** le couplage est réalisé avec inclusion d'un conduit de dérivation (BL) pour créer une liaison fluidique entre la portion montante (VL) et la portion de retour (RL) avec contournement du moyen échangeur de chaleur de carburant (27).

6. Système (S1) selon l'une au moins des revendications 1 à 5, **caractérisé en ce qu'**un élément de détection de température d'entrée (NTC1) est prévu pour détecter la température d'entrée du fluide caloporteur à l'entrée du moyen échangeur de chaleur de carburant (27).

7. Système (S1) selon l'une au moins des revendications 1 à 6, **caractérisé en ce qu'**un élément de détection de température de sortie (NTC3) est prévu pour détecter la température de sortie du fluide caloporteur à la sortie du moyen échangeur de chaleur de carburant (27).

8. Système (S1) selon l'une au moins des revendications 1 à 7, **caractérisé en ce qu'**un moyen de pompage (34) est prévu pour acheminer le fluide caloporteur à travers le moyen échangeur de chaleur de carburant (27).

9. Système (S1) selon l'une au moins des revendications 1 à 8, **caractérisé en ce que** des actionneurs, notamment des vannes, sont prévus pour régler les conditions d'écoulement à travers le moyen échangeur de chaleur de carburant (27).

10. Système (S1) selon l'une au moins des revendications 4 et 5, **caractérisé en ce que** des actionneurs, notamment des vannes, sont prévus pour régler les conditions d'écoulement à travers le conduit de dérivation (BL).

11. Système (S1) selon l'une au moins des revendications 1 à 10, **caractérisé en ce qu'**un moyen de commande (C) est prévu pour régler le débit de fluide à travers la portion montante et la portion de retour (RL) et/ou le moyen échangeur de chaleur de carburant (27) de manière à obtenir des réglages de système adaptés à l'état de fonctionnement actuel du consommateur.

12. Système (S1) selon l'une au moins des revendications 1 à 11, **caractérisé en ce que** le moyen échangeur de chaleur de carburant (27) est mis en fonctionnement de telle sorte que, par le biais du flux de fluide caloporteur s'écoulant côté sortie, un potentiel de refroidissement est disponible pour le consommateur, en particulier le moteur, et/ou un système de recirculation des gaz d'échappement et/ou un système de refroidissement par air de suralimentation et/ou un système de climatisation de véhicule et/ou des moyens de transmission.

13. Système (S1) selon l'une au moins des revendications 1 à 12, **caractérisé en ce que** la dérivation du fluide caloporteur est effectuée à partir d'une région du consommateur qui fournit un potentiel de température suffisamment élevé pour appliquer la puissance d'évaporation à travers le moyen échangeur de chaleur de carburant (27).

14. Système (S1) selon la revendication 13, **caractérisé en ce que** la dérivation est effectuée à partir d'une portion à chauffage rapide et/ou à haute température du système de transfert de chaleur côté consommateur.

15. Système (S1) selon l'une au moins des revendications 1 à 14, **caractérisé en ce que** le flux de fluide caloporteur refroidi par la dissipation de chaleur du moyen échangeur de chaleur de carburant (27) est introduit dans le flux de fluide de refroidissement en amont d'un échangeur de chaleur à eau de refroidissement (K).

16. Système (S1) selon l'une au moins des revendications 1 à 15, **caractérisé en ce que** le consommateur est un moteur à combustion interne (BK).

17. Système (S1) selon l'une au moins des revendications 1 à 16, **caractérisé en ce que** le consommateur est une pile à combustible.

18. Système (S1) selon l'une au moins des revendications 1 à 17, **caractérisé en ce que** le système de transfert de chaleur forme le circuit de refroidissement du consommateur.

19. Système (S1) selon l'une au moins des revendications 1 à 18, **caractérisé en ce que** le système de transfert de chaleur coopère avec un système de recirculation de gaz d'échappement.

20. Système (S1) selon l'une au moins des revendications 1 à 19, **caractérisé en ce que** le système de chaleur résiduelle comprend un circuit de lubrifiant du consommateur ou des composants de transmission.

21. Système (S1) selon l'une au moins des revendications 1 à 20, **caractérisé en ce que** le transfert de chaleur dans le moyen échangeur de chaleur de carburant (27) est effectué sélectivement selon le principe à flux continu ou à flux inverse.

22. Système (S1) selon l'une au moins des revendications 1 à 21, **caractérisé en ce que** le carburant arrive au moins temporairement à l'état liquide dans le moyen échangeur de chaleur de carburant (27) .

23. Système (S1) selon l'une au moins des revendications 1 à 22, **caractérisé en ce que** l'hydrogène est utilisé comme carburant.

24. Système (S1) selon l'une au moins des revendications 1 à 23, **caractérisé en ce que** le carburant dans le réservoir a une température inférieure à 150K, dans le cas de l'hydrogène notamment inférieure à 20K.

25. Procédé d'évaporation d'un carburant stocké de manière cryogénique, en particulier de l'hydrogène, procédé dans lequel le carburant est dérivé d'un moyen formant réservoir et chauffé et évaporé par le biais d'un moyen évaporateur (VD) conçu comme un échangeur de chaleur, le flux de chaleur nécessaire à l'évaporation continue du carburant étant obtenu par le biais d'un flux de fluide caloporteur à température régulée qui est dérivé d'un système de transfert de chaleur prévu du côté consommateur,
**caractérisé en ce que**
- le flux de fluide dérivé du système de transfert de chaleur côté consommateur est acheminé dans un circuit primaire,
- un flux de fluide d'évaporateur, guidé à travers le moyen évaporateur (VD), est guidé dans un circuit secondaire,
- le flux de fluide dérivé du système de transfert de chaleur côté consommateur et le flux de fluide d'évaporateur passant à travers le moyen évaporateur (VD) sont couplés thermiquement et
- le flux de fluide dérivé du système de transfert de chaleur côté consommateur et le flux de fluide d'évaporateur guidé à travers le moyen évaporateur (VD) sont réglés au moins par phases à différents niveaux en fonction de l'état de fonctionnement du consommateur afin de régler, par le biais du débit massique du fluide caloporteur, l'apport de chaleur dans le carburant, lequel diffère au moins par phases du débit massique provoqué par la dissipation de chaleur du consommateur.

26. Procédé selon la revendication 25, **caractérisé en ce que** le réglage des débits de fluide est effectué à condition de produire la quantité de chaleur, nécessaire à la production du carburant gazeux, en particulier de l'hydrogène, dans la gamme de gradients de température spécifiés.

27. Procédé selon l'une au moins des revendications 25 et 26, **caractérisé en ce que** le réglage des débits de fluide est effectué à condition de produire la quantité de chaleur, nécessaire à la production d'hydrogène gazeux, au-dessous d'une température d'entrée spécifiée du débit de fluide d'évaporateur.

28. Procédé selon l'une au moins des revendications 25 à 27, **caractérisé en ce que** le réglage des débits de fluide est effectué à condition de produire la quantité de chaleur, nécessaire à la production d'hydrogène gazeux, lorsque le débit de fluide d'évaporateur atteint une température de sortie spécifiée.
